# EUROPEAN PATENT APPLICATION

(11) **EP 0 942 565 A2**
(43) Date of publication of application: **15.09.1999**
(21) Application number: 99301937.1
(22) Date of filing: 12.03.1999
(51) Int. Cl.: H04L 27/233, H04B 1/707

(54) **Phase estimation for fading channels**

(30) Priority: 13.03.1998 JP 06315398
(71) Applicant: SONY CORPORATION, Tokyo (JP)
(72) Inventor: Yoshimura, Osamu, Shinagawa-ku, Tokyo (JP)
(74) Representative: Ayers, Martyn Lewis Stanley

(57) **Abstract**

In a data receiving apparatus for estimating the phase of fading by the use of symbols, a phase decision plane calculator reads out, from a memory, pilot blocks disposed before and after the current time slot, and then calculates a reference phase plane (phase of QPSK carrier) on the basis of such pilot blocks. A decision is made as to whether fast fading is observed or not from the reference phase plane. And if the result of this decision signifies fast fading, the reference phase plane is corrected on the basis of phase error information outputted from an adder in a controller. In this apparatus, the required memory capacity can be reduced, and fast estimation of the fading phase is realized.

## Description

The present invention relates to a data receiving apparatus, a data receiving method and a provision medium, and more particularly to those employed in a field of mobile communication and adapted for realizing satisfactory demodulation of data with a minimum delay in reception of the data transmitted by the use of convolutional code and phase modulation.

It is lately noticed that the market of mobile communication is in rapid expansion and progress. In the mobile communication system, there arises a peculiar problem of reception level variation which is termed fading. This fading is a phenomenon that, when a mobile vehicle or the like travels while receiving many radio waves of different propagation paths, the frequency of the radio waves from the front is shifted to be higher due to the Doppler effect, while the frequency of the radio waves from the rear is shifted to be lower, and consequently, if these radio waves are mixed in a data receiver, the amplitudes and the phases thereof are distorted to cause variations in the reception level.

Since some differences are existent among arrival times (propagation delay times) of a multiplicity of incoming waves in propagation paths, there occurs frequency selective fading where amplitude and phase variations are not uniform with regard to the frequencies of bands in radio transmission channels. An equalizer is employed as a filter to compensate for any deterioration caused by inter-code interference that is derived from such frequency selective fading. Equalizers are classified into a linear type to form inverse characteristic of transmission channel distortion, and a nonlinear type which adopts nonlinear technique. Nonlinear equalizers include a decision feedback type, and a sequence detection algorithm based on estimation of a maximum likelihood sequence.

The algorithm mentioned above is disclosed, for example, in Shingaku Giho, " Suppression of Intra-Channel Interference by Extension of Fading Estimation Using Pilot Symbols" (SAT97-69, CS97-113 (1997-10)). According to this technique, the fading of the current frame is estimated, in addition to the fading relative to pilot symbol, by the use of the estimated fading value obtained in the preceding frame relative to the data symbol.

However, according to the above-described technique, a plurality of frames and pilot blocks anterior and posterior to the current frame are also required additionally, hence necessitating a memory of a great capacity to store such data with another problem that a longer time is needed to demodulate the data.

It is therefore an object of the present invention to accomplish improvements which are capable of diminishing the required storage capacity of a data memory and realizing fast estimation of the phase of fading.

According to one aspect of the present invention, there is provided a data receiving apparatus for estimating the phase of fading by the use of symbols. The apparatus comprises a calculation means for calculating a reference phase of a carrier on the basis of pilot blocks disposed before and after the current time slot; a detection means for detecting the vector phase error of each data symbol on the basis of the reference phase; and a correction means for correcting the reference phase on the basis of the vector phase error.

And according to another aspect of the present invention, there is provided a data receiving method for estimating the phase of fading by the use of symbols. The method comprises the steps of calculating a reference phase of a carrier on the basis of pilot blocks disposed before and after the current time slot; detecting the vector phase error of each data symbol on the basis of the reference phase; and correcting the reference phase on the basis of the vector phase error.

The above and other features and advantages of the present invention will become apparent from the following description which will be given with reference to the illustrative accompanying drawings, in which
Fig. 1 is a block diagram showing an exemplary configuration of an embodiment which represents a data transmitter/receiver where the present invention is applied;
Fig. 2 is an explanatory diagram showing a time slot structure in mobile communication;
Fig. 3 is a block diagram showing a structural example of a demodulator 17 in Fig. 1; and
Fig. 4 is a flowchart for explaining the operation performed in the data receiving apparatus of the present invention.

### DETAILED DESCRIPTION OF THE PREFERRED EMBODIMENTS

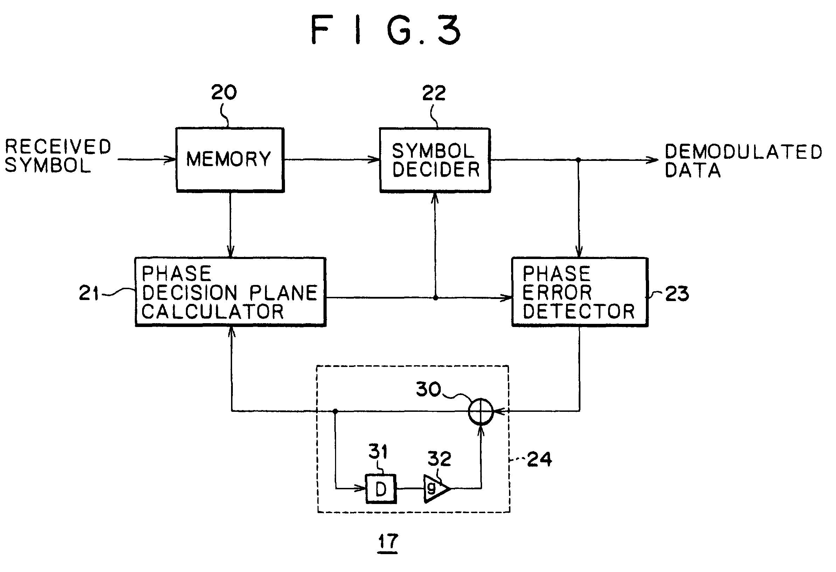

In a preferred embodiment of the invention, the data receiving apparatus for estimating the phase of fading by the use of symbols comprises a calculation means (e.g., phase decision plane calculator 21 shown in Fig. 3) for calculating the reference phase of a carrier on the basis of pilot blocks disposed before and after the current time slot; a detection means (e.g., phase error detector 23 shown in Fig. 3) for detecting the vector phase error of each data symbol on the basis of the reference phase; and a correction means (e.g., controller 24 shown in Fig. 3) for correcting the reference phase on the basis of the vector phase error.

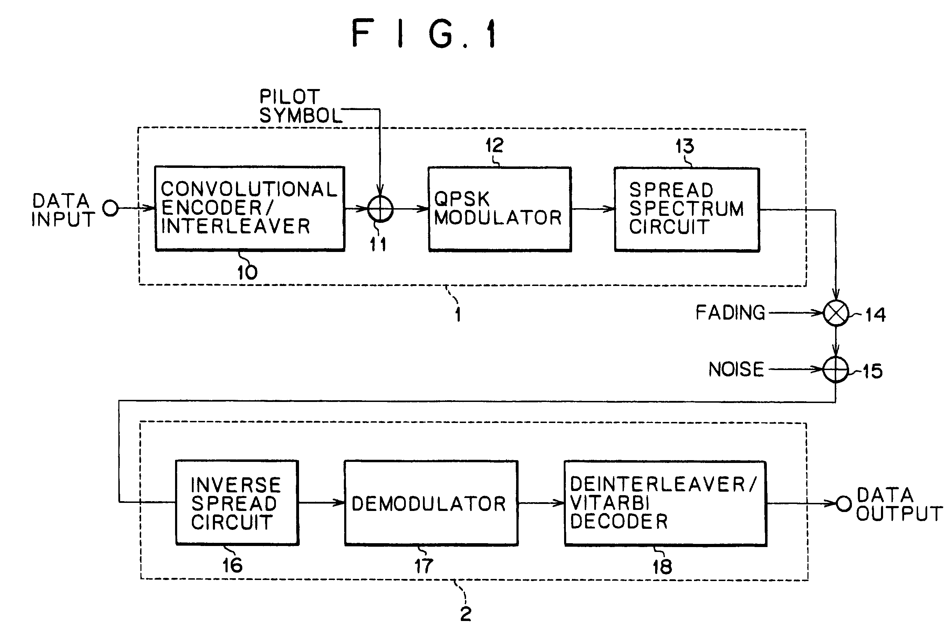

Fig. 1 is a block diagram showing an exemplary configuration of an embodiment which represents a data transmitter/receiver where the present invention is applied. First on the transmitter side, data to be transmitted is inputted to a convolutional encoder/interleaver 10. In mobile communication, transmission errors peculiar to wireless transmission, such as fading (phenomenon of variations caused in the field strength of radio waves), are prone to be generated more than in wire communication, so that convolutional encoding is adopted as an error correction technique to protect data from transmission errors. Convolutional encoding is an art which enables past encoded information to exert influence upon current encoded information and, in combination with Viterbi decoding, it forms a remarkably effective error correction code. According to the convolutional encoding, the current input bit is added, per bit, to some preceding bits (the number thereof is termed a restraint length) by mod 2 addition (executed in conformity with rules of 0 + 0 = 0, 0 + 1 = 1, 1 + 0 = 1, 1 + 1 = 0), and the result is obtained as an output bit. Therefore, transmitted data symbols are encoded successively bit by bit.

Interleave is a technique to transmit signals while spacing them mutually at a time interval required to attain uncorrelated positions, thereby changing any burst error to a random error to consequently facilitate application of an error correction code. A pilot symbol is added, in an adder 11, to the encoded data outputted from the convolutional encoder/interleaver 10, and the output of the adder 11 is supplied to a QPSK (Quadrature Phase Shift Keying) modulator 12.

The QPSK modulator 12 executes QPSK modulation of the encoded data inputted thereto, and then supplies the modulated data to a spread spectrum circuit 13. QPSK modulation signifies a process of quarternary transmission which transmits information of two bits per symbol time, where four different phases of a carrier are allocated to two-bit information (" 00" , " 01" , " 10" , " 11" ) with a phase shifted by 90° .

The spread spectrum circuit 13 executes spread spectrum modulation of the QPSK-modulated data and then supplies the processed data to an unshown antenna. This spread spectrum modulation is a process of transmitting the data by further widening the transmission band thereof. The spread spectrum modulation is advantageous in the points that it is effective against multi-path frequency selective fading and is not affected much harmfully by interference or disturbance waves. In DS-SS (Direct Sequence Spread Spectrum), for example, an information signal to be transmitted is directly multiplied by a spread code having a sufficiently wider bandwidth in comparison with the signal bandwidth, whereby the signal band is further widened. The spread code is required to have a sequence excellent in both autocorrelation and cross correlation characteristics. Normally, PN (Pseudo Noise) code or Barker code is employed.

Since the signal transmitted from an unshown antenna passes through a free space as a propagation path, the signal is affected harmfully by fading, noise and interference. Such harmful influence is shown in relation to a multiplier 14 and an adder 15.

The signal propagated through the free space is received by an unshown antenna on the receiver side, and the signal thus received is supplied from the antenna to an inverse spread circuit 16. This circuit 16 multiplies the received signal by a spread code which is the same as that used on the transmitter side and is synchronized therewith, hence executing inverse spread. In case any multi-path fading is existent, it is possible by the inverse spread circuit 16 to separate multiple waves (many waves of different propagation paths), so that satisfactory demodulation can be performed by selectively compositing such waves (path diversity).

The inverse spread circuit 16 converts the received signal to the former narrow-band modulated signal prior to the spread spectrum and then supplies the same to a demodulator 17. Subsequently the demodulator 17 eliminates the noise and interference components via a narrow-band filter and, after demodulating the information bits, supplies the same to a deinterleaver/Viterbi decoder 18.

The demodulator 17 comprises a carrier reproducing circuit (not shown) to reproduce the suppressed carrier component from the received signal through a nonlinear process, a bit timing reproducing circuit (not shown) to reproduce the clock component from the received signal, and a matched filter (not shown) to perform elimination of the out-band noise component and also waveform shaping. The demodulator 17 detects the received signal (by synchronous detection) in accordance with a reference carrier generated in an unshown carrier reproducing circuit. The synchronous detection has an advantage of attaining an enhanced bit error rate characteristic.

In the mobile communication where multiple propagation paths are existent between the data transmitter 1 and the data receiver 2, multi-path fading is generated to consequently deteriorate the signal transmission quality. In such multi-path transmission, there occur some paths having, in the demodulator 17, a plurality of peaks correspondingly to the arrival times and the signal strengths. According to the RAKE reception system, such paths are discriminated individually and weighted in respect of reliability for composition.

The deinterleaver/Viterbi decoder 18 decodes the data symbol supplied thereto and then outputs the data. Viterbi decoding (maximum likelihood decoding) is adopted to decode the convolutional code, wherein a predetermined number of input bit strings are stored on the receiver side, and the most likely state is estimated out of all possible state transitions that may be taken by the output signal obtained from the next received signal. This Viterbi decoding is optimal for theoretically attaining the highest code gain (degree of deterioration of decode error rate between encoded and non-encoded signals). In the Viterbi decoder, there is achieved an advantageous feature that, although a required memory quantity is increased, merely the same decoding operation is performed repeatedly without the necessity of any complicated logical calculation.

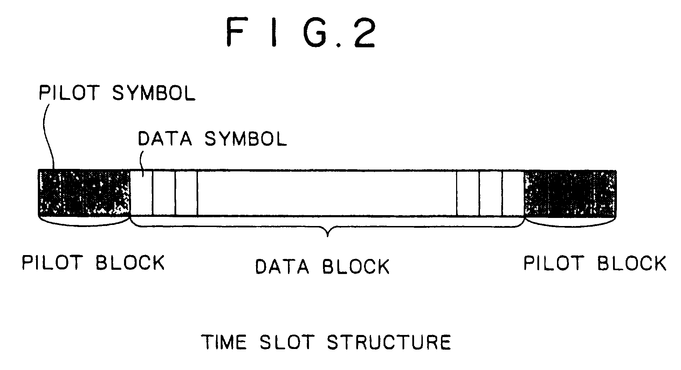

Fig. 2 shows a time slot structure in mobile communication. As shown in this diagram, the pilot blocks are disposed before and after the data blocks.

Fig. 3 is a block diagram showing an exemplary structure of an embodiment which represents the demodulator 17 in the present invention. The received symbol converted in the inverse spread circuit 16 to the former narrow-band modulated signal prior to the spread spectrum is supplied to a memory 20. There are stored, in the memory 20, the data symbol of one time slot shown in Fig. 2 and the pilot blocks disposed before and after such data symbol.

A phase decision plane calculator 21 reads out, from the memory 20, the pilot blocks disposed before and after the current time slot, and then calculates the reference phase plane (phase of QPSK carrier) on the basis of such pilot blocks. A controller 24 adds, to the phase error supplied thereto from a phase error detector 23, the value obtained by multiplying, in an amplifier 32, g times the past phase error stored in a register 31, and then outputs the result of such addition to the phase decision plane calculator 21 while storing the same again in the register 31.

A symbol decider 22 decides the data symbol, which is supplied thereto from the memory 20, on the basis of the reference phase plane obtained from the phase decision plane calculator 21, and then outputs the demodulated data.

The phase error detector 23 detects the vector phase error which represents the difference between each data symbol supplied from the symbol decider 22 and the reference phase plane supplied from the phase decision plane calculator 21, and then supplies such vector phase error to an adder 30.

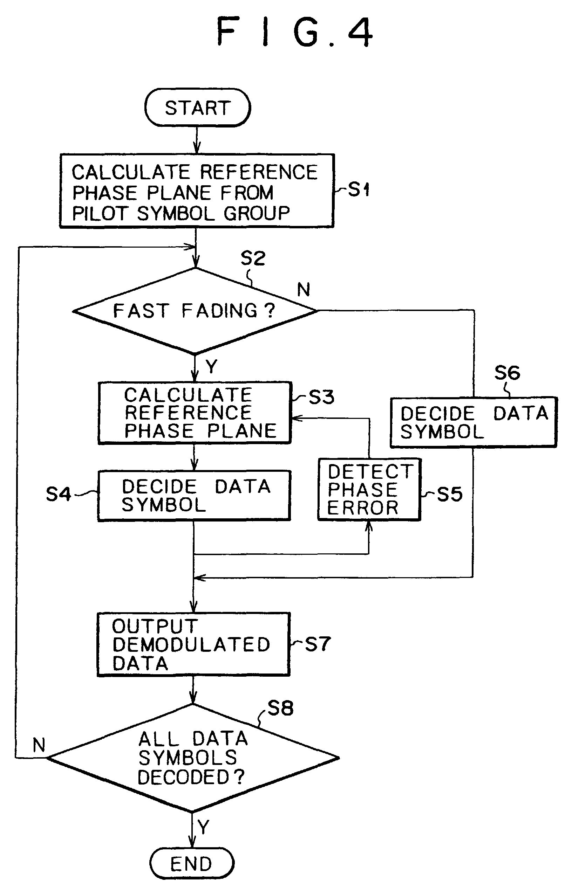

Next, the operation performed in the demodulator 17 will be described below with reference to Fig. 4. First of all at step S1, the phase decision plane calculator 21 reads out from the memory 20 the pilot blocks disposed before and after the current time slot, and then calculates the reference phase plane (phase of QPSK carrier) on the basis of such pilot blocks. In principle, a reference phase plane can be detected from one pilot block. However, more exact detection is achievable by finding the average value of the preceding and following pilot blocks and utilizing such average value.

Subsequently at step S2, the phase decision plane calculator 21 makes a decision as to whether fast fading is observed or not from the detected reference phase plane. In the case of fast fading (when fading variation is fast), the deviation from the original phase on the reference phase plane is great. Meanwhile, in the case of slow fading (when fading variation is slow), the phase deviation is small. Therefore, this decision can be executed by comparing the phase deviation on the reference phase plane with a predetermined threshold value. If the result of the decision signifies fast fading, the operation proceeds to step S3.

At step S3, the phase decision plane calculator 21 calculates the reference phase plane on the basis of the phase error information outputted from the adder 30 in the controller 24 and corrects it, and then the operation proceeds to step S4.

Thereafter at step S4, the symbol decider 22 makes a decision as to the data symbol supplied from the memory 20, on the basis of the reference phase plane corrected at step S3 by the phase decision plane calculator 21, and then outputs the demodulated data.

At step S5, the phase error detector 23 detects the vector phase error which represents the difference between the reference phase plane and each data symbol, and then outputs the detected error to the adder 30 in the controller 24. The adder 30 adds, to the input phase error, the value obtained by multiplying, in the amplifier 32, g times the accumulated value of the entire phase errors stored in the register 31, and then stores the result of such addition in the register 31. The value of g is set to be smaller than 1. Thus, the phase errors are averaged by adding the accumulated value, hence suppressing momentary control on the phase error.

If the result of the decision at step S2 is negative to signify none of fast fading, the operation proceeds to step S6, where the phase decision plane calculator 21 makes a decision as to the data symbol by the use of the reference phase plane obtained at step S1, without correcting the reference phase plane.

Subsequently, the data obtained after the decision at step S4 or S6 is outputted at step S7 as demodulated data.

Then another decision is made at step S8 as to whether the entire data symbols in the data block have been completely decoded or not. And if the result of this decision signifies that there is still any data symbol to be processed, the operation returns to step S2, and the subsequent process is executed repeatedly.

In the embodiment described above, modulation and demodulation of the data are performed by the QPSK system. However, the present invention is applicable also to some other case of adopting a multi-value multi-phase modulation system based on 16QAM, 64QAM or the like.

Thus, according to the present invention, the phase of fading is estimated on the basis of pilot blocks disposed before and after the current time slot and each data symbol, whereby the required memory capacity can be reduced. Consequently, it becomes possible to achieve an advantage of realizing fast estimation of the fading phase.

## Claims

1. A data receiving apparatus for estimating the phase of fading by the use of symbols, comprising:
a calculation means for calculating a reference phase of a carrier on the basis of a received pilot block;
a decision means for deciding a received data symbol on the basis of said reference phase; and
a detection means for detecting the vector phase error of the data symbol decided by said decision means on the basis of said reference phase;
wherein said reference phase is corrected on the basis of said vector phase error.

2. The data receiving apparatus according to claim 1, wherein the process of correcting said reference phase is selectively changed in accordance with the variation speed of the fading.

3. The data receiving apparatus according to claim 2, wherein the process of correcting said reference phase is executed only when the variation speed of the fading is higher than a predetermined value.

4. The data receiving apparatus according to claim 1, 2 or 3 wherein said calculation means calculates the reference phase of the carrier on the basis of pilot blocks disposed before and after the current time slot.

5. The data receiving apparatus according to claim 1, 2, 3 or 4 wherein said reference phase is corrected on the basis of data obtained through multiplication of the vector phase error output by a value corresponding to the accumulation of past phase errors.

6. A data receiving method for estimating the phase of fading by the use of symbols, comprising the steps of:
calculating a reference phase of a carrier on the basis of a received pilot block;
deciding a received data symbol on the basis of said reference phase;
detecting the vector phase error of each data symbol on the basis of said reference phase; and
correcting said reference phase on the basis of said vector phase error.
